# FASCICULE DE BREVET EUROPEEN

(11) **EP 0 489 636 B1**
(45) Date de publication et mention de la délivrance du brevet: **11.09.1996**
(21) Numéro de dépôt: 91403259.4
(22) Date de dépôt: 02.12.1991
(51) Int. Cl.: D01F 9/08, C03C 25/00

(54) **Procédé et fibres pour la fabrication de matériau composite à matrice renforcée par des fibres céramiques**
Verfahren und Fasern zur Herstellung von mit keramischen Fasern bewehrtem Matrixverbundmaterial
Process and fibres for the fabrication of ceramic fibre-reinforced matrix composite material

(30) Priorité: 03.12.1990 FR 9015127
(43) Date de publication de la demande: 10.06.1992
(73) Titulaire: SOCIETE EUROPEENNE DE PROPULSION, F-92150 Suresnes (FR)
(72) Inventeur: Christin, François, F-33160 Saint Aubin de Medoc (FR); Mocaer, Didier, F-33700 Gradignan (FR); Pailler, René, F-33610 Cestas (FR)
(74) Mandataire: Joly, Jean-Jacques

(56) Documents cités:
- EP-A- 0 280 387

## Description

La présente invention concerne la fabrication de matériau composite à matrice renforcée par des fibres céramiques.

Pour réaliser une pièce en un tel matériau composite, on procède généralement à l'élaboration d'une préforme fibreuse, ayant une forme voisine de celle de la pièce à réaliser, puis à sa densification par infiltration du matériau constitutif de la matrice au sein de la porosité de la préforme. La densification peut être réalisée par voie liquide (cycle(s) d'imprégnation-pyrolyse) ou par voie gazeuse (cycle(s) d'infiltration chimique en phase vapeur).

La présente invention vise plus précisément la fabrication de matériau composite renforcé par des fibres céramiques, notamment des fibres issues de précurseurs organo-métalliques, par exemple des fibres essentiellement en carbure de silicium ou nitrure de silicium issues de précurseurs organo-siliciés.

Par rapport aux fibres obtenues par un dépôt chimique en phase vapeur d'un revêtement céramique sur une âme métallique ou carbone, celles obtenues par pyrolyse (céramisation) d'un précurseur organo-métallique sont d'une façon générale plus aptes à subir des opérations textiles, notamment le tissage, et sont d'un coût inférieur. Toutefois, elles présentent des propriétés mécaniques encore limitées.

La présente invention a pour but de remédier à ces inconvénients en proposant un procédé permettant d'améliorer le comportement mécanique de ces fibres et, par voie de conséquence, des matériaux composites dans lesquels elles sont utilisées comme renfort.

Ce but est atteint du fait que, selon l'invention, les fibres céramiques, notamment issues d'un précurseur organo-métallique (choisi, par exemple, parmi les polycarbosilanes, polycarbosilazanes et polysilazanes), sont, après céramisation et avant formation de la matrice, irradiées par exposition à un rayonnement électromagnétique constitué par des rayons X ou des rayons de longueur d'onde inférieure, de préférence des rayons γ.

L'utilisation de rayonnements γ ou X lors du processus d'élaboration de fibres céramiques issues de précurseurs organométalliques est connue. Ainsi, en particulier dans le cas de fibres issues de précurseurs organo-siliciés tels que polycarbosilanes (PCS), polycarbosilazanes (PCSZ) et polysilazanes (PSZ), il a été proposé d'irradier les fibres en polymère après filage et avant traitement thermique de céramisation, l'objet de l'irradiation étant de faire passer les fibres en polymére à l'état non fusible.

Selon la présente invention, l'irradiation est effectuée sur les fibres déjà céramisées et apporte, de façon inattendue, une amélioration substantielle des propriétés mécaniques des fibres et des matériaux composites dont elles constituent le renfort.

Les fibres céramiques peuvent être irradiées sous quelque forme que ce soit, par exemple fils, mèches, torons, câbles, tissus, feutres, mats et même préformes bi- ou tridimensionnelles. Selon la forme de la texture fibreuse à irradier, on choisit un rayonnement suffisamment pénétrant. A cet égard, le rayonnement y est préféré du fait de son meilleur pouvoir pénétrant dû à sa plus petite longueur d'onde.

Lorsque l'irradiation entraîne une augmentation du module d'Young, il sera avantageux d'effectuer le traitement sur des fibre ayant subi au préalable une opération textile, par exemple un tissu, afin d'obtenir une texture fibreuse constituée de fibres de module, d'Young élevé qu'il serait difficile voire impossible de tisser.

La dose d'irradiation est comprise entre quelques mégarads et quelques centaines de mégarads, typiquement entre 10 et 300 mégarads. Elle peut être choisie, après essais préalables, en fonction du degré de modification souhaité des propriétés mécaniques, et en fonction de l'état cristallin de la fibre et de sa nature.

Le débit de dose d'irradiation est choisi par exemple entre quelques dizièmes de mégarad/heure à quelques mégarads/heure, typiquement entre 0,1 et 10 mégarads/heure. Il peut toutefois atteindre environ 1000 mégarads/heure.

Pour atteindre la dose d'irradiation voulue, la durée du traitement varie par conséquent entre quelques heures et quelques centaines d'heures.

La température lors du traitement d'irradiation peut être la température ambiante. Toutefois, en vue de diminuer la durée de l'irradiation, pour un même résultat, la température peut être choisie à une valeur supérieure à l'ambiante, jusqu'à 1000°C. L'augmentation de température peut alors être simplement celle résultant de l'échauffement provenant du rayonnement.

La nature de l'atmosphère utilisée lors du traitement d'irradiation est indifférente dans la mesure où elle est compatible avec la nature de la fibre. Par commodité, l'irradiation est alors de préférence effectuée sous air ou sous atmosphère inerte (azote ou argon).

Une pièce en matériau composite est réalisée à partir d'une préforme fibreuse en fibres céramiques irradiées par toute technique connue d'infiltration de la matrice par voie liquide ou par voie gazeuse. Le matériau constitutif de la matrice est choisi en fonction de l'application envisagée pour la pièce à réaliser. La matrice est par exemple en une matière céramique (telle que du carbure de silicium formé par infiltration chimique en phase vapeur), ou vitreuse, ou vitrocéramique.

Des exemples de réalisation de l'invention seront maintenant décrits, à titre indicatif mais non limitatif, en référence aux dessins annexés, sur lesquels :
- la figure 1 montre une courbe représentant la variation de la contrainte à rupture d'une mèche de fibres à base de carbure de silicium en fonction de la dose d'irradiation reçue, et
- la figure 2 montre une courbe représentant la variation du module d'Young d'une même mèche de fibres en fonction de la dose d'irradiation reçue.

Dans les exemples qui suivent, les fibres céramiques considérées sont des fibres à précurseur organo-silicié, et plus précisément des fibres à base de carbure de silicium (ci-après fibres SiC) à précurseur polycarbosilane (PCS).

### Exemple 1

Des fibres SiC sont obtenues par traitement thermique de fibres PCS selon le procédé décrit par E. Bouillon dans la thèse No 307, Bordeaux 1989.

Les fibres, sous forme de mèches, sont introduites dans des conteneurs et placées dans une chambre d'irradiation où elles sont soumises à un rayonnement γ provenant d'une source cobalt (⁶⁰Co) avec un débit de dose d'environ 0,5 mégarad/heure. Le traitement est effectué sous air et à température ambiante (c'est-à-dire sans autre apport d'énergie thermique que celle produite par le rayonnement). Les conteneurs sont retirés de la chambre au bout de durées d'exposition croissantes et des mèches de fibres traitées sont testées en traction à température ambiante pour une longueur de jauge de 10 mm.

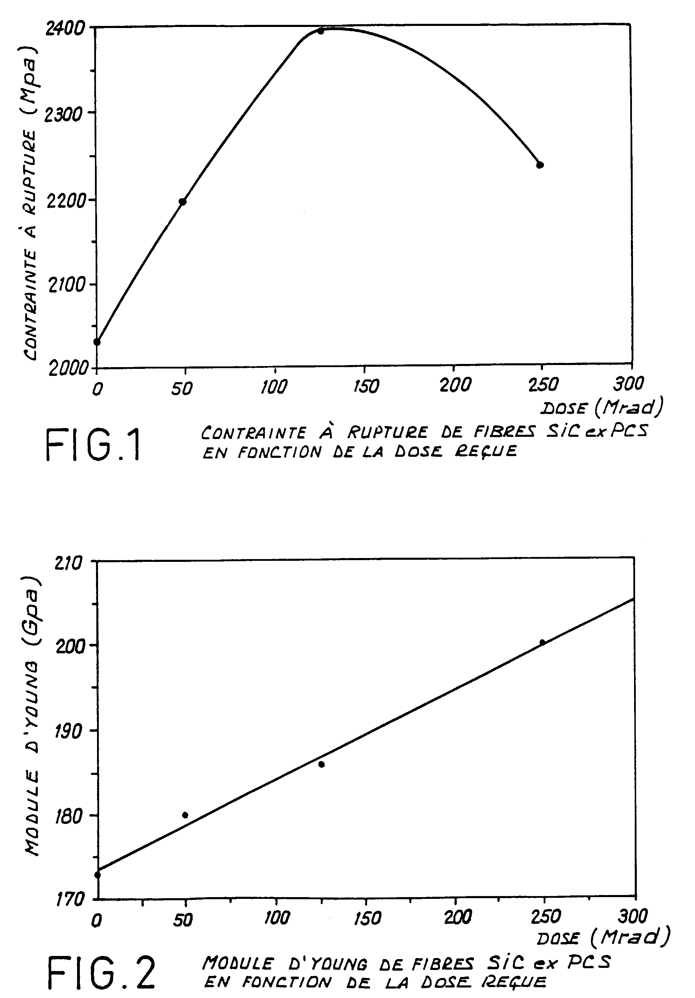

Les figures 1 et 2 montrent les valeurs mesurées de la contrainte à rupture et du module d'Young pour différentes durées d'exposition au rayonnement γ, c'est-à-dire différentes doses d'irradiation.

La figure 1 montre que la contrainte à rupture passe par un maximum, avec une amélioration d'environ 20 % pour une dose d'environ 100 mégarads.

La figure 2 montre que le module d'Young croit avec la dose d'irradiation reçue, une augmentation de 15 % étant constatée pour la dose maximale administrée.

Il a été noté une faible réduction de section des fibres suite au traitement d'irradiation.

Selon la caractéristique mécanique recherchée en priorité, les fibres pourront être traitées différemment : des temps d'exposition relativement longs et correspondant à plusieurs centaines de mégarads d'irradiation conduisent à un accroissement important du module d'Young, alors qu'un temps intermédiaire de traitement correspondant environ à une centaine de mégarads conduit à une contrainte à rupture maximale.

### Exemple 2

On procède comme dans l'exemple 1 à partir de fibres SiC commercialisées par la société japonaise Nippon Carbon, sous la référence "Nicalon" "NLM 102".

Le tableau ci-après donne les valeurs mesurées de la contrainte à rupture σ et du module d'Young E sur des fibres "NLM 102" non irradiées et sur des fibres "NLM 102" ayant reçu une dose de rayonnement γ d'environ 150 mégarads avec un débit de dose d'environ 0,5 mégarad/heure.

| | fibres "NLM 102" | fibres "NLM 102" irradiées |
|---|---|---|
| σ(MPa) | 2800 | 3900 |
| E(GPa) | 170 | 270 |

On constate un accroissement de la contrainte à rupture d'environ 40 % et du module d'Young d'environ 60 %.

### Exemple 3

On procède comme dans l'exemple 1 à partir de fibres SiC commercialisées par la société japonaise Nippon Carbon, sous la référence "Nicalon" "NL 202". Le tableau ci-après donne les valeurs mesurées de la contrainte à rupture σ et du module d'Young E sur des fibres "NL 202" non irradiées et sur des fibres "NL 202"ayant reçu une dose de rayonnement γ d'environ 200 mégarads avec un débit de dose d'environ 0,4 Mégarad/heure.

| | fibres "NL 202" | fibres "NL 202" irradiées |
|---|---|---|
| σ (MPa) | 2630 | 3250 |
| E (GPa) | 207 | 190 |

On constate un accroissement de la contrainte à rupture d'environ 20 %, alors que le module d'Young diminue légèrement.

### Exemple 4

Une préforme fibreuse sous forme d'un cube de 2 cm de côté est réalisée à partir de fibres SiC identiques à celles utilisées dans l'exemple 1. La préforme est obtenue par découpe d'un empilage de couches de tissu en fibres SiC.

La préforme est introduite dans une chambre d'irradiation où elle est soumise à un rayonnement γ jusqu'à atteindre une dose d'irradiation d'environ 120 mégarads avec un débit de dose d'environ 0,5 mégarad/heure.

Après traitement, on fait subir des essais de traction à des mèches de fibres prélevées au sein de la préforme. Il est constaté que les résultats des essais sont comparables à ceux obtenus dans l'exemple 1, ce qui montre la bonne pénétration du rayonnement γ au coeur de la préforme.

## Revendications

1. Procédé de fabrication d'un matériau composite à matrice renforcée par des fibres céramiques issues d'un précurseur, caractérisé en ce que, après céramisation du précurseur et avant formation de la matrice du matériau composite, les fibres sont irradiées par exposition à un rayonnement électromagnétique de longueur d'onde égale ou inférieure à celle des rayons X.

2. Procédé selon la revendication 1, caractérisé en ce que les fibres sont exposées à un rayonnement γ.

3. Procédé selon l'une quelconque des revendications 1 et 2, caractérisé en ce que l'irradiation est réalisée sur une texture formée par les fibres céramiques.

4. Procédé selon la revendication 3, caractérisé en ce que l'irradiation est réalisée sur une préforme fibreuse destinée à la réalisation d'une pièce en matériau composite.

5. Procédé selon l'une quelconque des revendications 1 à 4, caractérisé en ce que la dose d'irradiation reçue par les fibres est comprise entre environ 10 et 300 mégarads.

6. Procédé selon l'une quelconque des revendications 1 à 5, caractérisé en ce que le débit de dose d'irradiation est compris entre environ 0,1 et 10 mégarads/heure.

7. Procédé selon l'une quelconque des revendications 1 à 6, caractérisé en ce que les fibres sont issues d'un précurseur organo-silicié.

8. Procédé selon l'une quelconque des revendications 1 à 7, caractérisé en ce que le traitement d'irradiation est effectué à une température comprise entre la température ambiante et 1000°C.

9. Procédé selon l'une quelconque des revendications 1 à 8, caractérisé en ce que la matrice du matériau composite est choisie parmi les matières céramiques, vitreuses et vitrocéramiques.

10. Fibres céramiques issues d'un précurseur organométallique et destinées à constituer une préforme fibreuse de renfort pour un matériau composite obtenu par densification de la préforme,
caractérisées en ce que les fibres ont subi un traitement d'amélioration de leurs caractéristiques mécaniques par irradiation par un rayonnement électromagnétique de longueur d'onde égale ou inférieure à celle des rayons X.

11. Fibres selon la revendication 10, caractérisées en ce qu'elles ont été irradiées par un rayonnement γ.

12. Fibres selon l'une quelconque des revendications 10 et 11, caractérisées en ce qu'elles sont issues d'un précurseur organo-silicié.

13. Fibres selon l'une quelconque des revendications 10 à 12, caractérisées en ce qu'elles sont issues d'un précurseur choisi parmi les polycarbosilanes, polycarbosilazanes et polysilazanes.

14. Fibres selon l'une quelconque des revendications 10 à 13, caractérisées en ce qu'elles sont essentiellement en carbure de silicium.

## Patentansprüche

1. Verfahren zur Herstellung eines mit aus einem Vorläufer hervorgegangenen keramischen Fasern verstärkten Matrixverbundmaterials,
**dadurch gekennzeichnet**,
daß nach der Keramisierung des Vorläufers und vor der Bildung der Matrix des Verbundmaterials die Fasern bestrahlt werden, indem man sie einer elektromagnetischen Strahlung mit einer Wellenlänge, die gleich der oder geringer als die von Röntgenstrahlung ist, aussetzt.

2. Verfahren nach Anspruch 1,
**dadurch gekennzeichnet**,
daß die Fasern einer Gamma-Strahlung ausgesetzt werden.

3. Verfahren nach Anspruch 1 oder 2,
**dadurch gekennzeichnet**,
daß die Bestrahlung an einem von den keramischen Fasern gebildeten Gebilde durchgeführt wird.

4. Verfahren nach Anspruch 3,
**dadurch gekennzeichnet**,
daß die Bestrahlung an einer Faservorform, die zur Herstellung eines Teils aus Verbundmaterial bestimmt ist, durchgeführt wird.

5. Verfahren nach einem der Ansprüche 1 bis 4,
**dadurch gekennzeichnet**,
daß die von den Fasern empfangene Strahlungsdosis zwischen etwa 10 und 300 Megarad liegt.

6. Verfahren nach einem der Ansprüche 1 bis 5,
**dadurch gekennzeichnet**,
daß die Rate der Bestrahlungsdosis zwischen etwa 0,1 und 10 Megarad/Stunde liegt.

7. Verfahren nach einem der Ansprüche 1 bis 6,
**dadurch gekennzeichnet**,
daß die Fasern aus einem siliziumorganischen Vorläufer hervorgegangen sind.

8. Verfahren nach einem der Ansprüche 1 bis 7,
**dadurch gekennzeichnet**,
daß die Bestrahlungsbehandlung bei einer Temperatur zwischen der Umgebungstemperatur und 1000°C durchgeführt wird.

9. Verfahren nach einem der Ansprüche 1 bis 8,
**dadurch gekennzeichnet**,
daß die Matrix des Verbundmaterials ausgewählt ist aus den keramischen, glasartigen und glaskeramischen Stoffen.

10. Keramische Fasern, die aus einem metallorganischen Vorläufer hervorgegangen und dazu bestimmt sind, eine Faservorform auszubilden zur Verstärkung für ein durch Verdichten der Vorform erhaltenes Verbundmaterial,
**dadurch gekennzeichnet**,
daß die Fasern eine Behandlung durchgemacht haben zur Verbesserung ihrer mechanischen Eigenschaften durch Bestrahlung mit einer elektromagnetischen Strahlung mit einer Wellenlänge, die gleich der oder geringer als die von Röntgenstrahlung ist.

11. Fasern nach Anspruch 10,
**dadurch gekennzeichnet**,
daß sie mit einer Gamma-Strahlung bestrahlt worden sind.

12. Fasern nach Anspruch 10 oder 11,
**dadurch gekennzeichnet**,
daß sie aus einem siliziumorganischen Vorläufer hervorgegangen sind.

13. Fasern nach einem der Ansprüche 10 bis 12,
**dadurch gekennzeichnet**,
daß sie hervorgegangen sind aus einem Vorläufer, der ausgewählt ist unter den Polycarbosilanen, Polycarbosilazanen und Polysilazanen.

14. Fasern nach einem der Ansprüche 10 bis 13,
**dadurch gekennzeichnet**,
daß sie im wesentlichen aus Siliziumkarbid sind.

## Claims

1. A method of fabricating a composite material comprising a matrix reinforced by ceramic fibers derived from a precursor, the method being characterized in that after the precursor has been ceramized and before the matrix of the composite material has been formed, the fibers are irradiated by being exposed to electromagnetic radiation of wavelength less than or equal to the wavelength of X-rays.

2. A method according to claim 1, characterized in that the fibers are exposed to gamma radiation.

3. A method according to claim 1 or 2, characterized in that the radiation is applied to a texture made of ceramic fibers.

4. A method according to claim 3, characterized in that the irradiation is performed on a fiber preform for use in making a composite material part.

5. A method according to any one of claims 1 to 4,
characterized in that the radiation dose received by the fibers lies in the range about 10 megarads to about 300 megarads.

6. A method according to any one of claims 1 to 5,
characterized in that the irradiation dose rate lies in the range about 0.1 megarad/hour to about 10 megarad/hour.

7. A method according to any one of claims 1 to 6,
characterized in that the fibers are derived from an organo-silicon precursor.

8. A method according to any one of claims 1 to 7,
characterized in that the radiation treatment is performed at a temperature lying between ambient temperature and 1000°C.

9. A method according to any one of claims 1 to 8,
characterized in that the matrix of the composite material is selected from: ceramic materials, vitreous materials, and vitroceramic materials.

10. Ceramic fibers derived from an organo-metallic precursor and intended to constitute a reinforcing fiber preform for a composite material obtained by densifying the preform, characterized in that the fibers are subjected to radiation treatment to improve their mechanical characteristics, using electromagnetic radiation at a wavelength less than or equal to the wavelength of X-rays.

11. Fibers according to claim 10, characterized in that they have been irradiated with gamma rays.

12. Fibers according to claim 10 or 11, characterized in that they are derived from an organo-silicon precursor.

13. Fibers according to any one of claims 10 to 12,
characterized in that they are derived from a precursor selected from polycarbosilanes, polycarbosilazanes, and polysilazanes.

14. Fibers according to any one of claims 10 to 13,
characterized in that they are essentially made of silicon carbide.
